# EUROPÄISCHE PATENTSCHRIFT

(11) **EP 1 333 169 B1**
(45) Veröffentlichungstag und Bekanntmachung des Hinweises auf die Patenterteilung: **02.11.2005**
(21) Anmeldenummer: 02027713.3
(22) Anmeldetag: 11.12.2002
(51) Int. Cl.: F02D 41/02, F02D 41/40, F01N 3/28, F01N 3/023

(54) **Abgasanlage**
Exhaust system
Dispositif d'échappement

(30) Priorität: 01.02.2002 DE 10204073
(43) Veröffentlichungstag der Anmeldung: 06.08.2003
(73) Patentinhaber: J. Eberspächer GmbH & Co. KG, 73730 Esslingen (DE)
(72) Erfinder: Zacke, Peter, Dr., 73095 Albershausen (DE); Többen, Heike, Dr., 73033 Göppingen (DE); Wirth, Georg, 73230 Kirchheim/Teck (DE)

(56) Entgegenhaltungen:
- EP-A- 1 020 620
- WO-A-90/12950
- DE-A- 3 403 564
- DE-A- 3 711 101
- DE-A- 10 033 159
- DE-U- 8 716 319
- PATENT ABSTRACTS OF JAPAN vol. 016, no. 232 (M-1256), 28. Mai 1992 (1992-05-28) & JP 04 047115 A (NISSAN MOTOR CO LTD), 17. Februar 1992 (1992-02-17)

## Beschreibung

Die vorliegende Erfindung betrifft eine Abgasanlage nach dem Oberbegriff von Anspruch 1.

Eine derartige Abgasanlage ist aus der DE 3 403 564 A1 bekannt. Die Seknndärluftversorgungseinrichtung dieser Abgasanlage umfasst eine in die Wandung des Abgasrohrs einmiendende Leitung zur Luftzufuhr.

Aus der DE 44 43 133 A1 ist es bekannt, im Abgasstrang stromauf des Partikelfilters einen Brenner anzuordnen, der zur Regeneration des Partikelfilters gestartet wird, um die Abgastemperatur auf die gewünschte Regeneratioristemperatur anzuheben. Ein derartiger Brenner ist mit einer eigenen Brennstoffversorgung ausgestattet und verfügt üblicherweise auch über eine eigene Luftzufuhr. Bei der bekannten Ausführungsform erfolgt die Luftzufuhr zum Brenner über eine Abzweigungsleitung, die auf der Druckseite eines Abgasturboladers des Dieselmotors Ladeluft entnimmt. Der apparative Aufwand zur Realisierung eines separaten Brenner mit eigener Brennstoffversorgung ist relativ groß.

Die vorliegende Erfindung beschäftigt sich mit dem Problem, bei einer gattungsgemäßen Abgasanlage eine verbesserte Sekundärluftversongung vorzuschen.

Dieses Problem wird durch eine Abgasanlage, mit den Merkmalen des Anspruchs 1 gelöst.

Durch diese Bauweise wird eine intensive Durchmischung der zugeführten Sekundärluft mit dem fetten Abgas bereits bei der Einleitung der Sekundärluft erreicht. Einerseits bewirkt die Perforierung des Ringrohrs eine flächig verteilte, diffuse Lufteinleitung. Andererseits erzeugt das Ringrohr bei seiner Umströmung durch das Abgas Wirbel, die für eine intensive Durchmischung sorgen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Die Erfindung beruht auf dem allgemeinen Gedanken, über eine entsprechende Betätigung der Motorelektronik ein fettes Abgasgemisch zu erzeugen und vor einem dem Partikelfilter vorgeschalteten Oxidationskatalysator gasförmigen Oxidator zuzuführen, wobei die zugeführte Oxidatormenge so gewählt ist, dass einerseits eine im wesentlichen vollständige Verbrennung des im Abgas enthaltenen Dieselbrennstoffs im Oxidationskatalysator gewährleistet ist und andererseits noch hinreichend Oxidator für eine Zündung und rasche Verbrennung der im Partikelfilter angelagerten Partikel vorhanden ist. Eine derartige Bauweise ist mit einem relativ geringen konstruktiven Aufwand realisierbar. Desweiteren ist der Oxidationskatalysator zweckmäßig relativ nahe vor dem Partikelfilter angeordnet, so dass die durch die katalytische Reaktion erreichte Temperaturerhöhung im Abgas entsprechend kurz vor dem Partikelfilter erfolgt, so dass Wärmeverluste aufgrund langer Leitungswege vermieden werden können. Bei der aufgezeigten Vorgehensweise ist jedoch von besondere Bedeutung, dass die Zuführung des gasförmigen Oxidators, insbesondere Luft, so ausgelegt ist, dass auch nach der Verbrennung des Dieselkraftstoffs noch ausreichend Oxidator, insbesondere Sauerstoff, vorhanden ist, um einen raschen Abbrand der Rußpartikel zu gewährleisten.

Zweckmäßig wird der Fettbetrieb des Dieselmotors dadurch realisiert, dass der überschüssige Dieselkraftstoff zu einem Zeitpunkt nach eingespritzt wird, zu dem er nicht mehr zu einer Drehmomenterhöhung beiträgt. Diese Maßnahme hat zur Folge, dass sich durch diesen Fettbetrieb am Drehmoment des

Dieselmotors nichts ändert, d.h., dass eine Abhängigkeit des vom Dieselmotor gelieferten Drehmoments von einem vorgebbaren Wunschmoment nicht oder nicht wesentlich verändert wird. Sofern der Dieselmotor in einem Kraftfahrzeug angeordnet ist, entspricht dieses Wunschmoment dem Fahrerwunsch, wobei erfindungsgemäß der erwünschte Fettbetrieb so abgestimmt ist, dass der Fahrer den Wechsel des Betriebszustands nicht bemerkt.

Entsprechend einer bevorzugten Ausführungsform erfolgt die Einleitung des Oxidators unmittelbar vor dem Oxidationskatalysator. Durch diese Bauweise kann eine verfrühte Selbstentzündung des Brennstoff-Oxidator-Gemischs, eine unerwünschte Abkühlung des Gemischs oder eine verfrühte Zündung durch einen Durchschlag im Austrittsbereich einer der Brennkammern des Dieselmotors vermieden werden.

Das gewünschte fette Abgasgemisch kann beispielsweise durch einen entsprechenden Fettbetrieb des Dieselmotors eingestellt werden, d.h., dem Verbrennungsprozess des Dieselmotors wird ein fettes Verbrennungsgasgemisch zugeführt, bei dem der Dieselkraftstoff durch den fehlenden Sauerstoff nicht vollständig verbrannt wird, wodurch sich ein entsprechend fettes Abgasgemisch einstellt. Im Unterschied dazu ist es aber auch möglich, ein fettes Abgasgemisch dadurch auszubilden, dass nach dem eigentlichen Verbrennungsvorgang zusätzlicher Dieselkraftstoff nach eingespritzt wird und zwar zu einem Zeitpunkt, zu dem der Dieselkraftstoff keine Drehmomenterhöhung mehr bewirken kann. Die eigentliche Verbrennungsreaktion zur Drehmomenterzeugung im Dieselmotor kann dabei fett, stöchiometrisch oder mager betrieben werden, wobei bei einem Magerbetrieb des Dieselmotors eine Reaktion des nach der Verbrennungsreaktion noch vorhandenen Sauerstoffs durch die Nacheinspritzung - je nach Brennstoff-Luft-Verhältnis - in Kauf genommen werden kann. Dementsprechend ist es grundsätzlich möglich, den Dieselmotor hinsichtlich der Drehmomenterzeugung in der üblichen Weise mit einer mageren Verbrennung zu betreiben, auch wenn ein fettes Abgasgemisch erzeugt werden soll. Diese Vorgehensweise vereinfacht den Steuerungs- bzw. Regelungsaufwand zur Realisierung der Partikelfiltergeneration.

Sofern der Dieselmotor zur Aufladung einen Lader aufweist, kann entsprechend einer vorteilhaften Weiterbildung die Sekundärluftversorgung eine Abzweigungsleitung aufweisen, die einenends an die Druckseite des Laders und anderenends stromauf des Oxidators an den Abgasstrang angeschlossen ist. In dieser Abzweigungsleitung ist dann ein von der Motorsteuerung gesteuertes Steuerventil angeordnet, mit dem der Volumenstrom der Sekundärluftzuführung steuerbar ist. Bei dieser Weiterbildung wird die Sekundärlufteinblasung mit konstruktiv einfachen und preiswerten Maßnahmen realisiert, in dem zur Regeneration des Partikelfilters mehr oder weniger Ladeluft abgezweigt wird. Von besonderer Bedeutung ist hierbei, dass bei einem zunehmenden Abgasvolumenstrom, mit dem ein erhöhter Bedarf an zugeführter Sekundärluft einhergeht, quasi automatisch ein höherer Ladedruck vorliegt, der die Versorgung mit dem erforderlichen Sekundärluftvolumenstrom gewährleistet.

Eine besonders kompakte Bauweise ergibt sich, wenn der Oxidationskatalysator und das Partikelfilter in einem gemeinsamen Gehäuse untergebracht sind. Zweckmäßig kann in diesem Gehäuse in Strömungsrichtung zwischen Oxidationskatalysator und Partikelfilter eine Mischzone ausgebildet sein. Vorzugsweise leitet die Sekundärluftversorgung die Luft vor dem Oxidationskatalysator in das Gehäuse ein. Durch die kompakte Bauweise können z.B. Wärmeverluste reduziert werden. Desweiteren ermöglicht die Bauweise mit einem gemeinsamen Gehäuse eine hoch integrierte Vormontage, wodurch der Einbau der so gebildeten Baugruppe in den Abgasstrang vereinfacht wird.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine dreidimensionale Ansicht auf eine stark vereinfachte Darstellung eines Dieselmotors nach der Erfindung und
- Fig. 2: eine perspektivische Ansicht auf ein vergrößertes Detail entsprechend einem Schnitt II in Fig. 1.

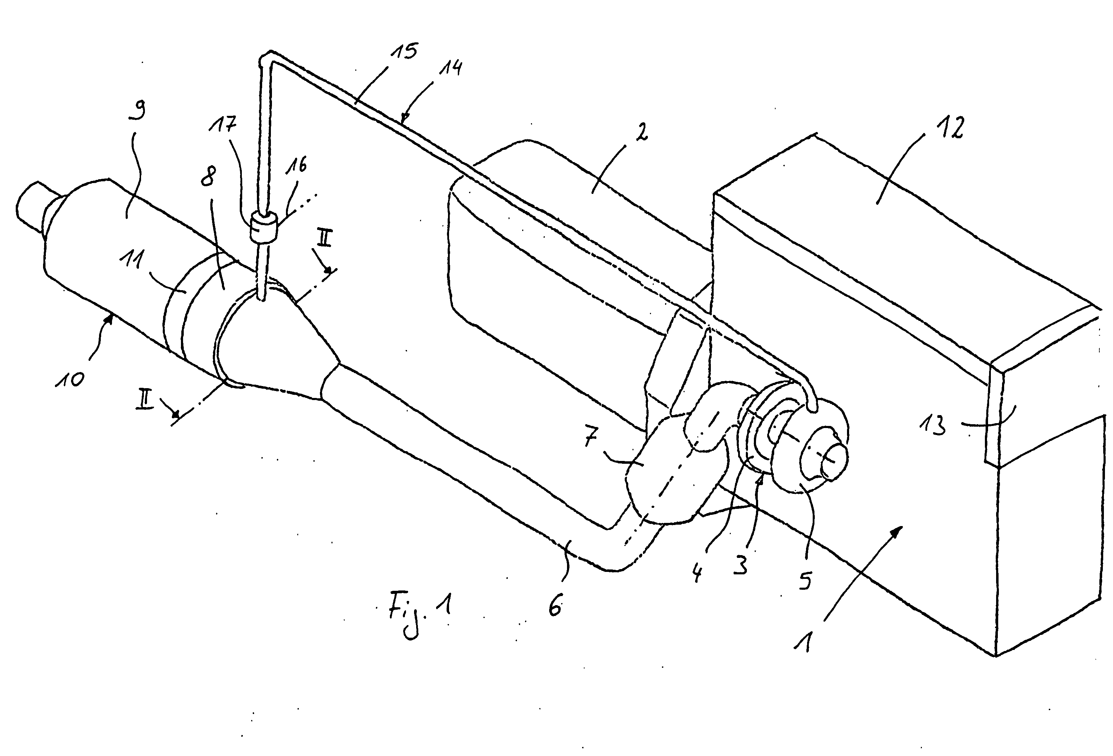

Entsprechend Fig. 1 ist ein Dieselmotor 1 mit einem Getriebe 2 antriebsverbunden und ist vorzugsweise in ein nicht gezeigtes Fahrzeug eingebaut. Der Dieselmotor 1 wird mit aufgeladener Ladeluft versorgt, die mit Hilfe eines Laders 3 bereitgestellt wird, der im gezeigten Ausführungsbeispiel als Abgasturbolader mit Turbine 4 und Verdichter 5 ausgebildet ist. Durch die Turbine 4 gelangen die Verbrennungsabgase in einen Abgasstrang 6 einer Abgasanlage nach der Erfindung, in dem relativ nahe am Dieselmotor 1 ein Startkatalysator 7 und relativ weit vom Dieselmotor 1 entfernt ein Oxidationskatalysator 8 und stromab davon ein Partikelfilter 9 angeordnet sind. Der Startkatalysator 7, der üblicherweise auch als Oxidationskatalysator ausgebildet ist, dient in herkömmlicher Weise dazu, in den Abgasen des Dieselmotors Kohlenmonoxid und unverbrannte Kohlenwasserstoffe zu oxidieren, was im üblichen Magerbetrieb, also Betrieb mit Luftüberschuss, ohne weiteres realisierbar ist.

Das Partikelfilter 9 das beispielsweise aus Siliciumcarbid oder Cordierit besteht, scheidet aus den Abgasen mitgeführte Partikel, insbesondere Rußpartikel, aus, die sich dabei im Partikelfilter 9 ablagern. Der dem Partikelfilter 9 zugeordnete und relativ dicht vorgeschaltete Oxidationskatalysator 8 wird für die Regeneration des Partikelfilters 9 zur Temperaturanhebung benötigt, was weiter unten näher erläutert wird.

In der hier gezeigten bevorzugten Ausführungsform sind Partikelfilter 9 und zugehöriger Oxidationskatalysator 8 in einem gemeinsamen Gehäuse 10 untergebracht, wodurch eine einfach vormontierbare und als Baugruppe einfach in den Abgasstrang 6 einbaubare Einheit gebildet ist. Bezüglich der Durchströmungsrichtung dieses Gehäuses 10 ist zwischen dem Oxidationskatalysator 8 und dem Partikelfilter 9 ein Mischraum 11 ausgebildet, in dem sich das aus Oxidationskatalysator 8 austretende Abgas vor seinem Eintritt in das Partikelfilter 9 nochmals gründlich durchmischen kann.

Der Dieselmotor 1 ist außerdem mit einer Dieselkraftstoffeinspritzanlage 12 ausgestattet, die von einem Motorsteuergerät 13 des Dieselmotors 1 insbesondere hinsichtlich Einspritzzeitpunkt, Einspritzmenge und Anzahl der Einspritzvorgänge pro Arbeitstakt steuerbar ist.

Desweiteren ist eine Sekundärluftversorgungseinrichtung 14 vorgesehen, die hier im wesentlichen durch eine Abzweigungsleitung 15 gebildet ist, in der ein über eine Steuerleitung 16 mit der Motorsteuerung 13 verbundenes Steuerventil 17 angeordnet ist. Die Abzweigungsleitung 15 ist mit ihrem einen Ende an die Druckseite des Laders 3, hier direkt an den Verdichter 5 und mit ihrem anderen Ende unmittelbar vor dem Oxidationskatalysator 8 an den Abgasstrang 6, hier an das Gehäuse 10 angeschlossen. Über eine entsprechende Betätigung des Steuerventils 17 ist der in den Abgasstrang 6 einströmende Sekundärluftvolumenstrom steuerbar.

Die erfindungsgemäße Abgasanlage funktioniert wie folgt:

Während normaler Betriebsphasen des Dieselmotors 1 filtert das Partikelfilter 9 die im Abgas transportierten Partikel heraus, die sich dabei im Partikelfilter 9 ablagern. Hierdurch kommt es zu einer zunehmenden Beladung des Partikelfilters 9, mit der eine Abgasgegendruckzunahme einhergeht. Sobald ein vorbestimmter Beladungsgrad des Partikelfilters 9 erreicht ist, wird ein Regenerationsvorgang durchgeführt. Der Beladungsgrad des Partikelfilters 9 kann beispielsweise über einen Druckabfall am Partikelfilter 9 überwacht werden, wobei außerdem entsprechende Gegendruckkennfelder berücksichtigt werden können.

Sofern eine für den Regenerationsbetrieb geeignete Abgastemperatur vorliegt, wird über die Motorsteuerung 13 die Erzeugung eines fetten Abgasgemischs veranlasst, wobei außerdem das Steuerventil 17 zur Einleitung der erforderlichen Sekundärluftmenge betätigt wird. Das fette Abgasgemisch kann den Startkatalysator 7 relativ ungehindert durchströmen, da für eine katalytische Reaktion der Oxidator fehlt. Stromauf des Oxidationskatalysators 8 vermischt sich nun das fette Abgasgemisch mit dem zugeführten Luftvolumenstrom. Im Oxidationskatalysator 8 kann dann der im Abgas mittransportierte unverbrannte Dieselkraftstoff zusammen mit einem Teil der zugeführten Luft verbrannt werden. Durch diese stark exotherme Reaktion wird relativ rasch die für die Zündung der Partikelverbrennung erforderliche Temperatur von etwa 600 bis 700°C erreicht. Der über die Sekundärluftzuführung 14 eingeleitete Luftvolumenstrom ist so bemessen, dass auch nach der Oxidation im Oxidationskatalysator 8 noch hinreichend Oxidator, also Luftsauerstoff, vorhanden ist, um die Verbrennung der Partikel im Partikelfilter 9 hinreichend rasch realisieren zu können.

Der hierzu erforderliche Volumenstrom kann an der Druckseite des Laders 3 ohne oder ohne wesentliche Leistungseinbuße am Dieselmotor 1 abgezweigt werden. Hierbei ist von besonderer Bedeutung, dass die Förderleistung der Sekundärluftversorgungseinrichtung 14 zusammen mit dem Sekundärluftbedarf steigt oder fällt, denn wenn ein Betriebspunkt des Dieselmotors mit mehr Abgasvolumenstrom eine erhöhte Sekundärluftmenge benötigt, steht über die vom Abgasvolumenstrom abhängige Laderleistung automatisch mehr Ladedruck zur Erzeugung eines erhöhten Volumenstroms in der Abzweigungsleitung 15 zur Verfügung.

Die im fetten Abgasgemisch erforderliche Dieselmenge und die erforderliche Sekundärluftmenge können z.B. in Abhängigkeit vom aktuellen Betriebspunkt des Dieselmotors 1 aus Kennfeldern oder anhand geeigneter Rechenalgorithmen bestimmt und dementsprechend eingestellt, insbesondere eingeregelt, werden.

Beachtenswert ist außerdem, dass die Sekundärluft unmittelbar vor dem Oxidationskatalysator 8 in den Abgasstrang 6 eingeleitet wird, um dadurch bei erhöhten Abgastemperaturen eine Selbstentzündung des sich ausbildenden zündfähigen Gemischs an einer noch weit vom Partikelfilter 9 entfernten Stelle zu vermeiden. Ebenso kann dadurch eine Durchschlagszündung im Auslassbereich der Brennräume des Dieselmotors 1 vermieden werden.

Die Anordnung des Oxidationskatalysators 8 relativ unmittelbar vor dem Partikelfilter 9 hat für den Regenerationsbetrieb den Vorteil, dass vom Entstehungsort der heißen Abgase (Oxidationskatalysator 8) bis zum Partikelfilter 9 nur ein relativ kurzer Strömungsweg zurückzulegen ist, wodurch Wärmeverluste vermeidbar sind, die bei längeren Strömungswegen, beispielsweise vom Dieselmotor 1 bis zum Partikelfilter 9, auftreten. Insoweit ergibt sich für das erfindungsgemäße Verfahren ein reduzierten Energiebedarf beim Regenerationsbetrieb.

Wie weiter oben erläutert, soll die Regeneration des Partikelfilters 9 nur dann gestartet werden, wenn eine hinreichend hohe Abgastemperatur vor dem Oxidationskatalysator vorliegt. Hierdurch wird gewährleistet, dass die katalytische Reaktion zur Verbrennung des im fetten Abgas enthaltenen Brennstoffs gestartet werden kann. Diese Mindesttemperatur kann beispielsweise etwa 250°C betragen. Falls diese Mindesttemperatur nicht vorliegt, können über die Motorsteuerung 13 geeignete Maßnahmen eingeleitet werden, mit deren Hilfe die Abgastemperatur auf das gewünschte Maß erhöht werden kann. Beispielsweise kann durch eine geeignete Veränderung der Einspritzparameter ohne Beeinflussung der Leistungsabgabe des Dieselmotors 1 die Abgastemperatur erhöht werden, d.h. der Dieselmotor 1 wird absichtlich mit einem verschlechterten Wirkungsgrad betrieben.

Die Erzeugung des erfindungsgemäß erwünschten fetten Abgasgemischs soll so realisiert werden, dass dadurch eine Abhängigkeit des vom Dieselmotor 1 gelieferten Drehmoments von einem vorgebbaren Wunschmoment nicht oder nicht wesentlich verändert wird. Insbesondere bei einem Einbau des Dieselmotors 1 in ein Fahrzeug entspricht das gewünschte Moment dem Fahrerwunsch, der über die Gaspedalstellung erfasst wird. Diese Maßnahme hat zur Folge, dass der Regenerationsbetrieb keine Leistungseinbuße am Dieselmotor 1 auslöst, so dass der Regenerationsbetrieb vom Fahrer nicht als Komforteinbuße wahrgenommen wird.

Zweckmäßig wird das fette Abgasgemisch dadurch erzeugt, dass der überschüssige Dieselbrennstoff zu einem Zeitpunkt nacheingespritzt wird, zu dem er nicht mehr zu einer Drehmomenterhöhung beiträgt. Sofern der Dieselprozess bis zum zusätzlichen Nacheinspritzvorgang mager abläuft, soll die Nacheinspritzung also so spät erfolgen, dass eine Selbstentzündung zur Leistungssteigerung vermieden wird. Bei einem Magerbetrieb des Dieselmotors 1, bei dem durch die zusätzliche, an der Verbrennung nicht beteiligte Nacheinspritzung das fette Abgasgemisch erzeugt wird, kann durch Selbstentzündung oder spätestens im Starkatalysator 7 der noch vorhandene Restsauerstoff mit einem Teil des im Abgas transportierten Brennstoffs verbrennen. Stromab des Startkatalysators 7 liegt dann jedenfalls ein fettes Abgasgemisch ohne Oxidator vor.

Sofern bereits der Dieselprozess fett durchgeführt wird, kann das fette Abgasgemisch den Startkatalysator 7 ohne Verbrennungsreaktion durchströmen, da der erforderliche Oxidator fehlt.

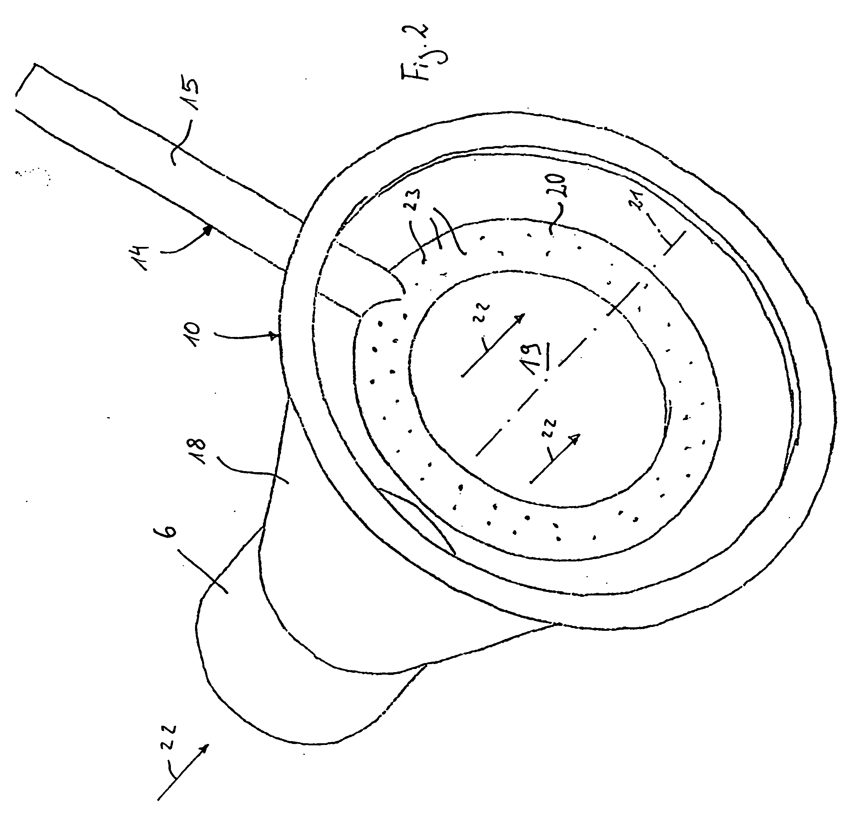

Entsprechend Fig. 2 dringt die Sekundärluftversorgungseinrichtung 14 mit einer Luftzuführungsleitung, die hier durch einen Abschnitt der Abzweigungsleitung 15 gebildet ist, seitlich in den Abgasstrang 6 bzw. in einen Einlaufbereich 18 des Gehäuses 10 ein. Im Inneren 19 des Gehäuses 10 bzw. des Abgasstrangs 6 trägt die Abzweigungsleitung 15 ein Ringrohr 20, in das sie einmündet. Das Ringrohr 20 ist dabei so im Inneren 19 des Abgasstrangs 6 bzw. des Gehäuses 10 positioniert, dass eine Ringachse 21 des Ringrohrs 20 parallel, insbesondere koaxial zur Durchströmungsrichtung der Abgase verläuft, die in Fig. 2 durch Pfeile 22 angedeutet ist. Diese Ringachse 21 verläuft insbesondere koaxial zur Längsachse des Abgasstrangs 6 bzw. des Gehäuses 10.

Das Ringrohr 20 ist mit einer Vielzahl von Öffnungen 23 versehen und ist dadurch perforiert oder gasdurchlässig ausgebildet. Durch diese Öffnungen 23 kann die über die Abzweigungsleitung 15 in das Ringrohr 20 eingeleitete Sekundärluft in den Abgasstrang 6 überströmen. Durch die Vielzahl der in Umfangsrichtung verteilten Öffnungen 23 erfolgt eine relativ flächige Luftzuführung in den Abgasstrang 6. Zweckmäßig ist die Perforation ausschließlich auf der stromabliegenden, in Fig. 2 dem Betrachter zugewandten Seite des Ringrohrs 20 ausgebildet. Durch die Art der Sekundärlufteinleitung und durch die Formgebung und Positionierung des Ringrohrs 20 im durchströmten Querschnitt erfolgt eine intensive Durchmischung des fetten Abgasgemischs mit der zugeführten Luft.

Bei der in Fig. 2 gezeigten Ausführungsform ist das Ringrohr 20 im Einlaufbereich 18 des Gehäuses 10 relativ dicht vor dem Oxidationskatalysator 8 angeordnet, so dass sich das Ringrohr 20 an einem Ort befindet, dessen durchströmbarer Querschnitt deutlich größer ist als im Abgasstrang 6 stromauf des Einlaufbereichs 18. Zweckmäßig ist der vom fetten Abgasgemisch frei durchströmbare Innenquerschnitt des Ringrohrs 20 etwa gleich groß wie oder größer als der vom fetten Abgasgemisch durchströmte Querschnitt im Abgasstrang 6 stromauf des Einlaufbereichs 18.

## Patentansprüche

1. Abgasanlage für einen mit einer steuerbaren Dieseleinspritzanlage (12) ausgestatteten Dieselmotor (1), insbesondere eines Kraftfahrzeugs, mit
- einem in einem Abgasstrang (6) angeordneten Partikelfilter (9),
- einem stromauf des Partikelfilters (9) im Abgasstrang (6) angeordneten Oxidationskatalysator (8),
- einer Steuerung (13) für eine Regeneration des Partikelfilters (9), welche den Dieselmotor (1) und/oder die Dieseleinspritzanlage (12) zur Erzeugung eines fetten Abgasgemischs derart ansteuert, dass eine Abhängigkeit des vom Dieselmotor (1) gelieferten Drehmoments von einem vorgebbaren Wunschdrehmoment nicht oder nicht wesentlich verändert wird,
- einer steuerbaren Sekundärluftversorgungseinrichtung (14) zur Lufteinleitung stromauf des Oxidationskatalysators (8) in den Abgasstrang (6),
wobei die Steuerung (13) die Sekundärluftversorgungseinrichtung (14) derart ansteuert, dass diese einen Luftvolumenstrom in den Abgasstrang (6) einleitet, der ausreicht, den Dieselkraftstoff im Oxidationskatalysator (8) und die Partikel im Partikelfilter (9) zu oxidieren,
**dadurch gekennzeichnet, dass**
die Sekundärluftversorgungseinrichtung (14) ein Ringrohr (20) aufweist, welches im Abgasstrang (6) oder im Gehäuse (10) derart angeordnet ist, dass seine Ringachse (21) parallel zur Durchströmungsrichtung verläuft,
wobei das Ringrohr (20) über eine seitlich in den Abgasstrang (6) bzw. das Gehäuse (10) eingeführte Luftzuführungsleitung (15) mit Luft versorgt und auf seiner stromabliegenden Seite perforiert ausgebildet ist.

2. Abgasanlage nach Anspruch 1, wobei zur Aufladung des Dieselmotors (1) ein Lader (3) vorgesehen ist und die Sekundärluftversorgungseinrichtung (14) eine Abzweigungsleitung (15) aufweist, die einenends an die Druckseite (5) des Laders (3) und anderenends stromauf des Oxidationskatalysators (8) an den Abgasstrang (6) angeschlossen ist, wobei in der Abzweigungsleitung (15) ein von der Steuerung (13) gesteuertes Steuerventil (17) angeordnet ist.

3. Abgasanlage nach Anspruch 2, wobei der Lader als mechanischer Lader oder als Abgasturbolader (3) ausgebildet ist.

4. Abgasanlage nach einem der Ansprüche 1 bis 3, wobei die Steuerung in eine Motorsteuerung (13) des Dieselmotors (1) hardwaremäßig integriert und/oder softwaremäßig implementiert ist.

5. Abgasanlage nach einem der Ansprüche 1 bis 4, wobei der Oxidationskatalysator (8) und der Partikelfilter (9) in einem gemeinsamen Gehäuse (10) angeordnet sind und das Ringrohr (20) in einem Einlaufbereich (18) des Gehäuses (10) relativ dicht vor dem Oxidationskatalysator (8) angeordnet ist.

6. Abgasanlage nach Anspruch 5, wobei das Ringrohr (20) in dem Einlaufbereich (18) derart angeordnet ist, dass sich das Ringrohr (20) an einem Ort befindet, dessen durchströmbarer Querschnitt deutlich größer ist als im Abgasstrang (6) stromauf des Einlaufbereichs (18).

7. Abgasanlage nach Anspruch 5 oder 6, wobei ein vom fetten Abgasgemisch frei durchströmbarer Innenquerschnitt des Ringrohrs (20) etwa gleich groß wie oder größer als der vom fetten Abgasgemisch frei durchströmte Querschnitt im Abgasstrang (6) stromauf des Einlaufbereichs (18) ist.

## Claims

1. Exhaust system for a diesel engine (1), in particular of a motor vehicle, equipped with a controllable diesel injection system (12), having
- a particulate filter (9) arranged in an exhaust section (6),
- an oxidation catalytic converter (8) arranged upstream of the particulate filter (9) in the exhaust section (6),
- a controller (13) for controlling regeneration of the particulate filter (9), which controller causes the diesel engine (1) and/or the diesel injection system (12) to generate a rich exhaust gas mix, in such a manner that a dependent relationship between the torque delivered by the diesel engine (1) and a predeterminable desired torque is not altered or is not significantly altered,
- a controllable secondary air supply device (14) for introducing air into the exhaust section (6) upstream of the oxidation catalytic converter (8), the controller (13) actuating the secondary air supply device (14) in such a manner that it introduces a sufficient volumetric flow of air into the exhaust section (6) to oxidize the diesel fuel in the oxidation catalytic converter (8) and the particulates in the particulate filter (9),
**characterized in that**
the secondary air supply device (14) has an annular tube (20), which is arranged in such a manner in the exhaust section (6) or in the housing (10) that its axis (21) runs parallel to the direction of throughflow,
the annular tube (20) being supplied with air via an air feed line (15) which is inserted laterally into the exhaust section (6) or the housing (10), and the annular tube (20) being perforated on its downstream side.

2. Exhaust system according to Claim 1, in which a supercharger (3) is provided for supercharging the diesel engine (1), and the secondary air supply device (14) has a branch line (15), which at one end is connected to the pressure side (5) of the supercharger (3) and at the other end is connected to the exhaust section (6) upstream of the oxidation catalytic converter (8), a control valve (17) controlled by the controller (13) being arranged in the branch line (15).

3. Exhaust system according to Claim 2, in which the supercharger is designed as a mechanical supercharger or as an exhaust gas turbocharger (3).

4. Exhaust system according to one of Claims 1 to 3, in which the controller is implemented as software and/or integrated as hardware in an engine controller (13) of the diesel engine (1).

5. Exhaust system according to one of Claims 1 to 4, in which the oxidation catalytic converter (8) and the particulate filter (9) are arranged in a common housing (10) and the annular tube (20) is arranged in an inlet region (18) of the housing (10), relatively closely upstream of the oxidation catalytic converter (8).

6. Exhaust system according to Claim 5, in which the annular tube (20) is arranged in the inlet region (18) in such a manner that the annular tube (20) is positioned at a location whereof the cross section of flow is significantly larger than in the exhaust section (6) upstream of the inlet region (18).

7. Exhaust system according to Claim 5 or 6, in which an internal cross section of the annular tube (20) through which the rich exhaust gas mix can flow freely is approximately the same size as, or larger than the free cross section in the exhaust section (6) through which the rich exhaust gas mix can flow freely upstream of the inlet region (18).

## Revendications

1. Installation de gaz d'échappement pour un moteur diesel (1) équipé d'une installation d'injection diesel (12) pouvant être commandée, notamment d'un véhicule à moteur, avec
- un filtre à particules (9) disposé dans une ligne de gaz d'échappement (6),
- un catalyseur à oxydation (8) disposé en amont du filtre à particules (9) dans la ligne de gaz d'échappement (6),
- une commande (13) pour une régénération du filtre à particules (9) qui commande le moteur diesel (1) et/ou l'installation d'injection diesel (12) en vue de la production d'un mélange de gaz d'échappement gras de sorte qu'une dépendance du couple de rotation fourni par le moteur diesel (1) n'est pas modifiée ou pas sensiblement modifiée par un couple de rotation souhaité pouvant être prédéterminé,
- un dispositif d'alimentation en air secondaire (14) pouvant être commandé en vue de l'introduction d'air en amont du catalyseur à oxydation (8) dans la ligne de gaz d'échappement (6),
la commande (13) commandant le dispositif d'alimentation en air secondaire (14) de sorte que celui-ci introduit un courant volumique d'air dans la ligne de gaz d'échappement (6) qui suffit pour oxyder le carburant diesel dans le catalyseur à oxydation (8) et les particules dans le filtre à particules (9),
**caractérisée en ce que**
le dispositif d'alimentation en air secondaire (14) présente un tuyau annulaire (20) qui est disposé dans la ligne de gaz d'échappement (6) ou dans le carter (10) de sorte que son axe annulaire (21) s'étend parallèlement à la direction d'écoulement,
le tuyau annulaire (20) étant alimenté en air par l'intermédiaire d'une conduite d'amenée d'air (15) introduite dans la ligne de gaz d'échappement (6) ou le carter (10) et étant réalisé de manière perforée sur son côté se trouvant en aval de l'écoulement.

2. Installation de gaz d'échappement selon la revendication 1, un compresseur d'alimentation (3) étant prévu en vue du chargement du moteur diesel (1) et le dispositif d'alimentation en air secondaire (14) présentant une conduite de dérivation (15) qui est raccordée à une extrémité au côté pression (5) du compresseur d'alimentation (3) et à l'autre extrémité en amont du catalyseur à oxydation (8) à la ligne de gaz d'échappement (6), une soupape de commande (17) commandée par la commande (13) étant disposée dans la conduite de dérivation (15).

3. Installation de gaz d'échappement selon la revendication 2, le compresseur d'alimentation étant réalisé en tant que compresseur d'alimentation mécanique ou en tant que turbosoufflante à gaz d'échappement (3).

4. Installation de gaz d'échappement selon l'une quelconque des revendications 1 à 3, la commande étant intégrée de manière matérielle dans une commande de moteur (13) du moteur diesel (1) et/ou mise en place de manière logicielle.

5. Installation de gaz d'échappement selon l'une quelconque des revendications 1 à 4, le catalyseur à oxydation (8) et le filtre à particules (9) étant disposés dans un carter commun (10) et le tuyau annulaire (20) étant disposé dans une région d'entrée (18) du carter (10) de manière relativement étanche avant le catalyseur à oxydation (8).

6. Installation de gaz d'échappement selon la revendication 5, le tuyau annulaire (20) étant disposé dans la région d'entrée (18) de sorte que le tuyau annulaire (20) se trouve en un lieu dont la section transversale pouvant être parcourue est nettement plus grande que dans la ligne de gaz d'échappement (6) en amont de la région d'entrée (18).

7. Installation de gaz d'échappement selon la revendication 5 ou 6, une section transversale interne pouvant être parcourue librement par le mélange de gaz d'échappement gras du tuyau annulaire (20) étant approximativement de même taille ou plus grande que la section transversale parcourue librement par le mélange de gaz d'échappement gras dans la ligne de gaz d'échappement (6) en amont de la région d'entrée (18).
